# EUROPEAN PATENT SPECIFICATION

(11) **EP 1 543 046 B1**
(45) Date of publication and mention of the grant of the patent: **10.05.2006**
(21) Application number: 03790933.0
(22) Date of filing: 28.08.2003
(51) Int. Cl.: C08F 8/14, C08L 29/14, C08F 8/28, C08K 5/06, B41C 1/10, B41M 5/36, B41M 5/40

(54) **HEAT-SENSITIVE POSITIVE WORKING LITHOGRAPHIC PRINTING PLATE PRECURSOR WITH A HIGH RESISTANCE TO CHEMICALS**
WÄRMEEMPFINDLICHER POSITIV ARBEITENDER LITHOGRAPHIE-DRUCKPLATTENVORLÄUFER MIT HOHER CHEMIKALIENBESTÄNDIGKEIT
PRECURSEUR DE PLAQUE LITHOGRAPHIQUE POSITIF THERMOSENSIBLE AVEC GRANDE RESISTANCE AUX AGENTS CHIMIQUES

(30) Priority: 28.08.2002 DE 10239505
(43) Date of publication of application: 22.06.2005
(73) Proprietor: Kodak Polychrome Graphics GmbH, 37520 Osterode/Harz (DE)
(72) Inventor: TIMPE, Hans-Joachim, 37520 Osterode (DE); MÜLLER, Ursula, 37412 Herzberg (DE); SAVARIAR-HAUCK, Celin, 37534 Badenhausen (DE)
(74) Representative: Vossius & Partner
(86) International application number: PCT/EP2003/009550
(87) International publication number: WO 2004/020484

(56) References cited:
- EP-A- 1 101 607
- US-A- 5 380 597
- PATENT ABSTRACTS OF JAPAN vol. 008, no. 005 (M-267), 11 January 1984 (1984-01-11) & JP 58 168597 A (RICOH KK), 4 October 1983 (1983-10-04)

## Description

The present invention relates to heat-sensitive, positive working elements, in particular heat-sensitive printing plate precursors, whose heat-sensitive coating comprises polyvinyl acetals; the invention furthermore relates to a process for their production and a process for imaging such elements.

The technical field of lithographic printing is based on the immiscibility of oil and water, wherein the oily material or the printing ink is preferably accepted by the image area, and the water or fountain solution is preferably accepted by the non-image area. When an appropriately produced surface is moistened with water and a printing ink is applied, the background or non-image area accepts the water and repels the printing ink, while the image area accepts the printing ink and repels the water. The printing ink in the image area is then transferred to the surface of a material such as paper, fabric and the like, on which the image is to be formed. Generally, however, the printing ink is first transferred to an intermediate material, referred to as blanket, which then in turn transfers the printing ink onto the surface of the material on which the image is to be formed; this technique is referred to as offset lithography.

A frequently used type of lithographic printing plate precursor (the term printing plate precursor refers to a coated printing plate prior to exposure and developing) comprises a photosensitive coating applied onto a substrate on aluminum basis. The coating can react to radiation such that the exposed portion becomes so soluble that it is removed during the developing process. Such a plate is referred to as positive working. On the other hand, a plate is referred to as negative working if the exposed portion of the coating is hardened by the radiation. In both cases, the remaining image area accepts printing ink, i.e. is oleophilic, and the non-image area (background) accepts water, i.e. is hydrophilic. The differentiation between image and non-image areas takes place during exposure.

In conventional plates, a film containing the information to be transferred is attached to the printing plate precursor in order to guarantee good contact under vacuum. The plate is then exposed by means of a radiation source, part of which is comprised of UV radiation. When a positive plate is used, the area on the film corresponding to the image on the plate is so opaque that the light does not affect the plate, while the area on the film corresponding to the non-image area is clear and allows light to permeate the coating, whose solubility increases. In the case of a negative plate, the opposite takes place: The area on the film corresponding to the image on the plate is clear, while the non-image area is opaque. The coating beneath the clear film area is hardened due to the incident light, while the area not affected by the light is removed during developing. The light-hardened surface of a negative working plate is therefore oleophilic and accepts printing ink, while the non-image area that used to be coated with the coating removed by the developer is desensitized and therefore hydrophilic.

For several decades, positive working commercial printing plate precursors were characterized by the use of alkali-soluble phenolic resins and naphthoquinone diazide derivatives; imaging was carried out by means of UV radiation.

Recent developments in the field of lithographic printing plate precursors have led to radiation-sensitive compositions suitable for the production of printing plate precursors which can be addressed directly by lasers. The digital image-forming information can be used to convey an image onto a printing plate precursor without the use of a film, as is common in conventional plates.

One example of a positive working, direct laser addressable printing plate precursor is described in US-A-4,708,925. The patent describes a lithographic printing plate precursor whose imaging layer comprises a phenolic resin and a radiation-sensitive onium salt. As described in the patent, the interaction between the phenolic resin and the onium salt results in an alkali solvent resistance of the composition, which restores the alkali solubility by photolytic decomposition of the onium salt. The printing plate precursor can be used as a precursor of a positive working printing plate or as a precursor of a negative printing plate, if additional process steps are added between exposure and developing, as described in detail in British patent no. 2,082,339. The printing plate precursors described in US-A-4,708,925 are UV-sensitive and can additionally be sensitized to visible and IR radiation.

Another example of a direct laser addressable printing plate precursor that can be used as a positive working system is described in US-A-5,372,907 and US-A-5,491,046. These two patents describe the decomposition of a latent Bronsted acid by radiation in order to increase solubility of the resin matrix upon image-wise exposure. As in the case of the printing plate precursor described in US-A-4,708,925, these systems can also be used as negative working systems in combination with additional process steps between imaging and developing. In the case of the negative working printing plate precursors, the decomposition products, are subsequentty used to catalyze a crosslinking reaction between the resins in order to render the layer of the irradiated areas insoluble, which requires a heating step prior to developing. As in US-A-4,708,925, these printing plate precursors are UV-sensitive due to the used acid-forming materials.

In EP-A-0 823 327, IR-sensitive printing plate precursors are described whose radiation-sensitive layer comprises, in addition to an IR absorber and a polymer such as novolak, a substance that reduces the alkaline developer solubility of the composition. As examples of such "solubility-suppressing agents", sulfonic acid esters, phosphoric acid esters, aromatic carboxylic acid esters, carboxylic acid anhydrides, aromatic ketones and aldehydes, aromatic amines and aromatic esters are mentioned *inter alia.* These printing plate precursors have a high degree of IR sensitivity and no additional process steps between exposure and developing are necessary; moreover, they can be handled under normal lighting conditions (daylight with a certain amount of UV radiation), i.e. no yellow light is necessary. The resistance of the developed printing plates to chemicals used in the Printing chamber (fountain solutions, organic solvents in printing inks, wash solutions etc.), however, is not completely satisfactory.

WO 99/21725 discloses IR-sensitive positive working printing plate precursors whose heat-sensitive layer comprises a substance that improves the resistance of the non-heated areas to an attack by the alkaline developer; this substance is selected from compounds with polyalkylene oxide units, siloxanes, as well as esters, ethers and amides of polyvalent alcohols. These printing plate precursors as well are characterized by a high degree of IR sensitivity and can be handled in normal daylight. Here as well, an improved resistance to printing chamber chemicals would be desirable. For printing applications involving large numbers of copies, a baking step is recommended.

US 5,380,597 discloses a laminar structure wherein the second layer consists of a plasticized polyvinyl acetal resin.

JP 58- 168597 describes a photo sensitive and heat sensitive recording material comprising an ammonium salt or amine salt of a water insoluble resin.

In EP-A-1 101 607, IR-sensitive elements are described whose IR-sensitive coatings additionally comprise a carboxylic acid derivative of a cellulose polymer. The use of this acidic cellulose polymer resulted in an improved resistance of the coating to organic solvents, which are e.g. contained in some printing inks, fountain solutions and wash solutions, so that the printing plates yielded higher numbers of copies.
In this application, tests were also carried out with polymeric acids of the methacrylic/acrylic acid type, copolymers of maleic acid, an acidic polyester, an acidic colophonium derivative as well as polyvinyl acetals with the structural formula

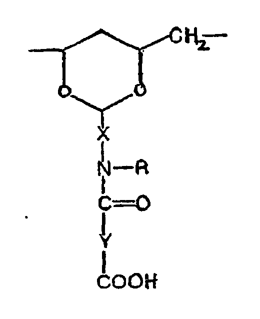

However, no improvement of the solvent resistance was observed with these polymers.

Despite the improvement achieved with the acidic cellulose polymer, there is still a demand for coatings exhibiting an even greater resistance to printing chamber chemicals, in particular in the field of lithographic printing plate precursors.

It is therefore the object of the present invention to provide heat-sensitive elements such as lithographic printing plate precursors which are characterized by an improved resistance to chemicals, while their IR sensitivity and developability remain unaffected.

It is furthermore an object of the present invention to provide a process for the production of such elements as well as a process for imaging such elements.

The first problem is surprisingly solved by an element comprising
(a) an optionally pre-treated substrate
(b) a positive working heat-sensitive coating comprising
   (i) at least one novolak resin,
   (ii) at least one component which reduces the aqueous alkaline developer solubility of novolak, wherein said reduction in solubility is reversed upon the application of heat, and
   (iii) at least one acidic polyvinyl acetal comprising the structural units (A), (B), (C) 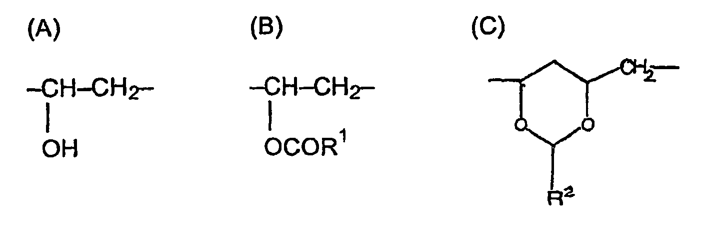 and (D), wherein (D) is at least one unit selected from (D-1), (D-2), and (D-3): 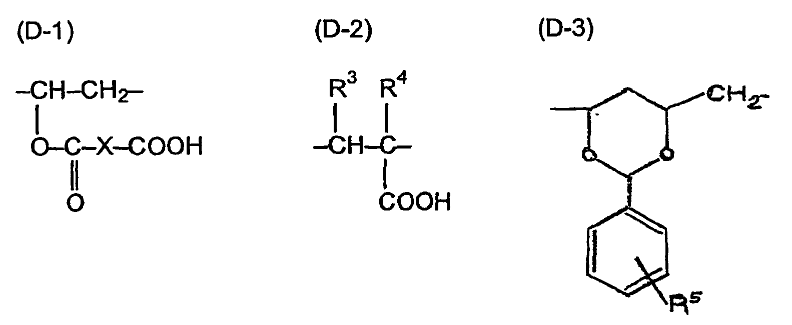
   wherein
   R¹ is a hydrogen atom or a C₁-C₄ alkyl group, R² is a hydrogen atom or a C₁-C₁₈ alkyl group, R³ is a hydrogen atom or a C₁-C₄ alkyl group, R⁴ is a hydrogen atom or a C₁-C₄ alkyl group, R⁵ is -COOH, -(CH₂)ₐ-COOH, -O-(CH₂)ₐ-COOH, -SO₃H, -PO₃H₂ or -PO₄H₂,
   a is an integer from 1 to 8, and X is selected from

   -(CR⁶R⁷)ₙ- and -CR⁸=CR⁹-

   wherein n is an integer of 1 to 6,
   each R⁶ and R⁷ is independently selected from a hydrogen atom and a C₁₋C₆ alkyl group (if n>1, not all R⁶ have to be the same, and neither do all R⁷), and
   R⁸ and R⁹ are independently selected from a hydrogen atom and a C₁-C₆ alkyl group or R⁸ and R⁹, together with the two carbon atoms to which they are bonded, form an optionally substituted aryl or heteroaryl group,
wherein components (i) and (ii) do not have to be present as separate substances but may be used in the form of an appropriately functionalized novolak.

The process according to the present invention for imaging these elements comprises the following steps:
(a) Providing a heat-sensitive element as defined above
(b) Image-wise exposure of the element with IR radiation or image-wise direct heating, and
(c) Removing the imaged/heated areas of the coating by means of an aqueous alkaline developer.

The heat-sensitive elements according to the present invention can e.g. be printing plate precursors (in particular precursors of lithographic printing plates), integrated circuit boards or photomasks.

A dimensionally stable plate or foil-shaped material is preferably used as a substrate in the production of printing plate precursors. Preferably, a material is used as dimensionally stable plate or foil-shaped material that has already been used as a substrate for printing matters. Examples of such substrates include paper, paper coated with plastic materials (such as polyethylene, polypropylene, polystyrene), a metal plate or foil, such as e.g. aluminum (including aluminum alloys), zinc and copper plates, plastic films made e.g. from cellulose diacetate, cellulose triacetate, cellulose propionate, cellulose acetate, cellulose acetatebutyrate, cellulose nitrate, polyethylene terephthalate, polyethylene, polystyrene, polypropylene, polycarbonate and polyvinyl acetate, and a laminated material made from paper or a plastic film and one of the above-mentioned metals, or a paper/plastic film that has been metallized by vapor deposition. Among these substrates, an aluminum plate or foil is especially preferred since it shows a remarkable degree of dimensional stability; is inexpensive and furthermore exhibits excellent adhesion to the coating. Furthermore, a composite film can be used wherein an aluminum foil has been laminated onto a polyethylene terephthalate film.

A metal substrate, in particular an aluminum substrate, is preferably subjected to a surface treatment, for example roughening by brushing in a dry state or brushing with abrasive suspensions, or electrochemical roughening, e.g. by means of a hydrochloric acid electrolyte, and optionally to anodic oxidation.

Furthermore, in order to improve the hydrophilic properties of the surface of the metal substrate that has been roughened and optionally anodically oxidized in sulfuric acid or phosphoric acid, the metal substrate can be subjected to an after-treatment with an aqueous solution of sodium silicate, calcium zirconium fluoride, polyvinylphosphonic acid or phosphoric acid. Within the framework of the present invention, the term "substrate" also encompasses an optionally pre-treated substrate exhibiting, for example, a hydrophilizing coating on its surface.

The details of the above-mentioned substrate pre-treatment are well known to the person skilled in the art.

Novolak resins suitable for the present invention are condensation products of suitable phenols, e.g. phenol itself, C-alkyl-substituted phenols (including cresols, xylenols, p-tert-butylphenol, p-phenylphenol and nonylphenols) and diphenols (e.g. bisphenol-A), and suitable aldehydes such as formaldehyde, acetaldehyde, propionaldehyde and furfuraldehyde. The type of catalyst and the molar ratio of the reactants determine the molecular structure and thus the physical properties of the resin. An aldehydelphenol ratio of about 0.5:1 to 1:1, preferably 0.5:1 to 0.8:1 and an acid catalyst are used to prepare those phenolic resins that are known as "novolaks" and are of thermoplastic nature. As used in the present application, however, the term "novolak resin" is intended to also encompass the phenolic resins known as "resols", which are obtained when higher aldehyde/phenol ratios and basic catalysts are used.

The total amount of the novolak resin(s) in the heat-sensitive composition is preferably larger than the amount of polyvinyl acetal(s). Based on the dry layer weight, the amount of novolak resin is preferably at least 40 wt.-%, more preferably at least 50 wt.-%, more preferably at least 70 wt.-% and most preferably at least 80 wt.%. Usually, the amount does not exceed 95 wt.-%, preferably 85 wt.-%.

Imaging of the heat-sensitive elements can either be carried out by direct heating or by IR radiation, which is absorbed and converted to heat by photo-thermal conversion material (hereinafter also referred to as IR absorber).

The chemical structure of the IR absorber is not particularly restricted, as long as it is capable of converting the absorbed radiation into heat. It is preferred that the IR absorber exhibit essential absorption in the range of 650 to 1300 nm, preferably 750 to 1120 nm; preferably, it exhibits an absorption maximum in that range. It is furthermore preferred that the IR absorber hardly or not at all absorb UV radiation. The absorbers are selected e.g. from carbon black, phthalocyanine pigments/dyes and pigments/dyes of the squarylium, croconate, merocyanine, cyanine, indolizine, pyrylium or metaldithiolin class, preferably from the cyanine class. For example, the compounds listed in Table 1 of US-A-6,326,122 are suitable IR absorbers. Additional examples can be found in US-B-6,410,207 and EP-A-1 176 007.

If an IR absorber is present in the heat-sensitive coating, it is preferably present in an amount of at least 0.1 wt.% based on the dry layer weight, more preferably at least 1 wt.-%, most preferably at least 2 wt.-%. Usually, the amount of IR absorber does not exceed 25 wt.%, preferably 20 wt.% and most preferably 15 wt.%. Either a single IR absorber or a mixture of two or more can be present; in the latter case, the amounts given refer to the total amount of all IR absorbers.

The amount of IR absorber to be used also has to be considered in connection with the dry layer thickness of the coating. It should preferably be selected such that the optical thickness of the coating - measured for example on a transparent polyester film - preferably exhibits values between 0.4 and 1.0 at the wavelength of the incident IR light.

The heat-sensitive coating additionally comprises at least one substance which reduces the aqueous alkaline developer solubility of novolak, wherein said reduction in solubility is reversed upon the application of heat. In the following, this substance is simply referred to "insolubilizer". The insolubilizer may or may not be covalently bonded to a polymer.

Use can be made of the insolubilizers already described in the prior art, or others.

For example, the non-photosensitive compounds described in WO 98/42507 and EP-A-0 823 327, which have functional groups capable of entering a hydrogen bridge bond with the phenolic OH groups of novolak resins, are suitable insolubilizers. WO 98/42507 mentions sulfone, sulfoxide, thion, phosphine oxide, nitrile, imide, amide, thiol, ether, alcohol, urea, nitroso, azo, azoxy and nitro groups, as well as halogens and particularly keto groups as suitable functional groups. As examples of suitable compounds, xanthone, flavanone, flavone, 2,3-diphenyl-1-indenone, pyrone, thiopyrone and 1'-(2'-acetonaphthonyl)benzoate are mentioned.

In WO 99/01795, polymers with specific functional groups Q are used as insolubilizers, which preferably neither comprise a diazide group, nor an acid or acid-forming group; according to a preferred embodiment, Q is selected from amino, monoalkylamino, dialkylamino, amido, monoalkylamido, and dialkylamido groups, fluorine atoms, chlorine atoms, carbonyl, sulfinyl or sulfonyl groups. These polymeric insolubilizers can also be used in the present invention.

The insolubilizers described in WO 99/01796, in this case compounds with diazide units, can be used in the present invention as well.

Another group of insolubilizers suitable for the present invention is described in WO 97/39894. They are e.g. nitrogen-containing compounds, wherein at least one nitrogen atom is quatemized and forms part of a heterocyclic ring; examples include quinolinium compounds, benzothiazolium compounds and pyridinium compound, and in particular cationic trimethylmethane dyes such as Victoria Blue (C I Basic Blue 7), Crystal Violet (C I Basic Violet 3) and Ethyl Violet (C I Basic Violet 4). Furthermore, compounds with carbonyl functions such as N-(4-bromobutyl)phthalimide, benzophenone and phenanthraquinone are mentioned. Compounds of the formula Q₁-S(O)ₙ-Q₂ (with Q₁ = optionally substituted phenyl or alkyl group; n = 0, 1 or 2; Q₂ = halogen atom or alkoxy group), Acridine Orange Base and ferrocenium compounds are also suitable.

In case the possibly present IR absorbers comprise the structural elements mentioned in WO 97/39894, they also function as insolubilizers.

The functionalized novolaks described in U.S. patent application 09/751,650 and in US-B-6,320,018 can be used in the heat-sensitive elements of the present invention as well.

These novolaks comprise substituents that allow the formation of a two- or four-center hydrogen bridge bond (preferably a four-center hydrogen bridge bond) between the polymer molecules. This also decreases the aqueous alkaline developer solubility of the underlying novolak. Heating destroys such hydrogen bridge bonds and the original solubility of the novolak is restored. When such a functionalized novolak is used, it fulfills the function of components (i) and (ii) of the heat-sensitive composition so that the additional use of novolak without such functional groups and/or one of the above-mentioned insolubilizers is not necessary, but not impossible, either.

The functionalized novolaks comprise at least one covalently bonded unit and at least one non-covalently bonded unit, wherein the non-covalent bond is thermally unstable; these novolaks essentially comprise a two- or four-center hydrogen bridge bond at every non-covalently bonded unit. A preferred group of such functionalized novolaks, which may be used as novolak with simultaneous insolubilizing function, can be described with the following formula (I): 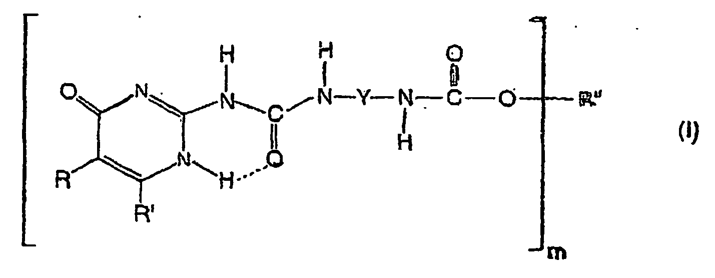 wherein R and R' are independently selected from a hydrogen atom and a cyclic or linear or branched saturated or unsaturated hydrocarbon group with preferably 1 to 22 carbon atoms (preferably hydrogen and C₁-C₄ alkyl), R" is a phenolic group derived from a novolak R"(OH)ₖ, Y is a divalent cyclic or linear or branched saturated or unsaturated hydrocarbon group with preferably 1 to 22 carbon atoms, derived from a diisocyanate of the formula Y(NCO)₂ (e.g. isophorone diisocyanate, toluene-1,2-diisocyanate, 3-isocyanatomethyl-1-methyl-cyclohexyl isocyanate), m is at least 1 and k is 1 or 2.

The preparation of functionalized novolaks of the formula I can be inferred from U.S. patent application 09/751,650.

Although all the insolubilizers mentioned above can be used in the heat-sensitive coating of the present invention, the following are preferred: Cyanine dyes, triarylmethane dyes, quinolinium compounds, the above-mentioned insolubilizers with one or more ketone groups, and the above-mentioned insolubilizers with one or more sulfone groups, as well as novolaks functionalized with substituents capable of forming a four-center hydrogen bridge bond. The cyanine dyes, triarylmethane dyes, quinolinium compounds, ketones and sulfones can be used as low-molecular substances or in a polymer-bonded form.

A single insolubilizer or mixtures of two or more compounds can be used in the heat-sensitive element of the present invention.

The amount of the insolubilizer(s) is not particularly restricted, as long as the aqueous alkaline developer solubility of the novolak is reduced. However, a decrease in solubility has to take place to such an extent that when an aqueous alkaline developer is applied, the heated areas of the layer are removed much more rapidly than the non-heated areas.

Independently of whether the insolubilizer also functions as an IR absorber, it is preferably present in an amount of at least 0.1 wt.-% based on the dry layer weight, more preferably at least 0.5 wt.-%, especially preferred at least 1 wt.-% and most preferred at least 2 wt.-%. Preferably, the amount does not exceed 25 wt.-%, more preferably 15 wt.-%.

According to the present invention, the heat-sensitive coatings comprise at least one polyvinyl acetal comprising the following structural units A, B, C and D: 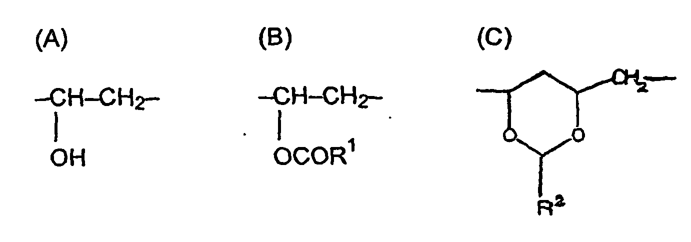 wherein D is at least one unit selected from D-1, D-2, and D-3: 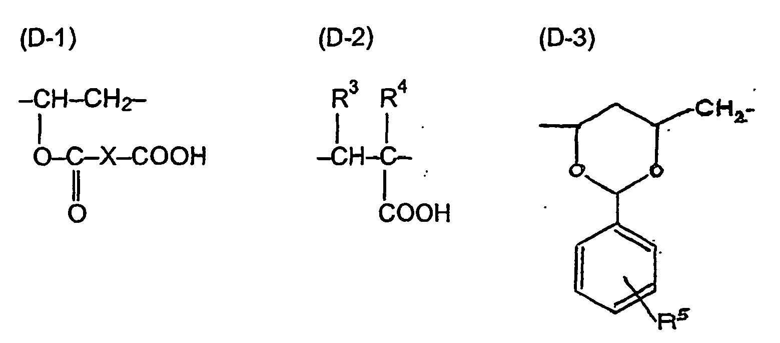 wherein
R¹ is H or C₁-C₄ alkyl (preferably H, -CH₃, -CH₂CH₃, especially preferred -CH₃),
R² is H or C₁-C₁₈ alkyl (preferably -CH₃, -CH₂CH₃, -(CH₂)₂CH₃, especially preferred -CH₂CH₃),
R³ is H or C₁-C₄ alkyl (preferably H, -CH₃, -CH₂CH₃, especially preferred H),
R⁴ is H or C₁-C₄ alkyl (preferably H, -CH₃, -CH₂CH₃, especially preferred H),
R⁵ is -COOH, -(CH₂)ₐ-COOH, -O-(CH₂)ₐ-COOH, -SO₃H, -PO₃H₂ or -PO₄H₂ (preferably -COOH, -SO₃H, -PO₃H₂, especially preferred -COOH), and
a is an integer from 1 to 8 (preferably 1 to 4, especially preferred 1).

X is selected from

-(CR⁶R⁷)ₙ- and -CR⁸=CR⁹-

wherein n is an integer of 1 to 6, each R⁶ and R⁷ is independently selected from a hydrogen atom and a C₁-C₆ (preferably C₁-C₄) alkyl group (if n>1, not all R⁶ have to be the same, and neither do all R⁷), and

R⁸ and R⁹ are independently selected from a hydrogen atom and a C₁-C₆ (preferably C₁-C₄) alkyl group or R⁸ and R⁹, together with the two carbon atoms to which they are bonded, form an optionally substituted aryl or heteroaryl group.

The optionally substituted aryl group can e.g. be an optionally substituted phenyl or naphthyl group, an unsubstituted phenyl group being preferred.

The optionally substituted heteroaryl group usually exhibits 5 or 6 ring atoms, one or more of which (preferably 1 or 2) are heteroatoms selected from sulfur, oxygen and nitrogen atoms. Preferred heteroaryl groups comprise 1 oxygen atom, 1 sulfur atom or 1-2 nitrogen atoms.

Suitable substituents for the aryl and heteroaryl groups are C₁-C₄ alkyl groups, C₁-C₄ haloalkane groups, cyano groups, C₁-C₄ alkoxy groups and -COOH. The number of substituents - if present - is usually 1 to 3, however, unsubstituted aryl and heteroaryl groups are preferred.

It is especially preferred that X be selected from

-CR¹⁰R¹¹-R¹²R¹³-; -CR¹⁴=CR¹⁵-

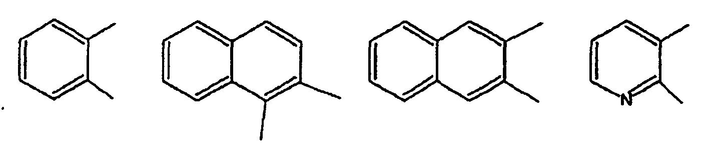

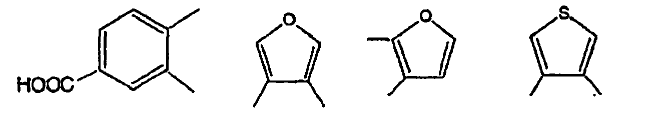

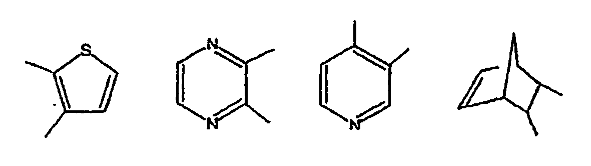

wherein R¹⁰ to R¹⁵ are each independently selected from a hydrogen atom and a C₁-C₆ alkyl group. Of the units (D-1), (D-2) and (D-3), (D-3) is especially preferred.

It is preferred that the polyvinyl acetals used in the present invention show an acid number of at least 10 mg KOH/g polymer, especially preferred at least 30 mg KOH/g polymer. Preferably, the acid number does not exceed 160 mg KOH/g polymer, more preferred 140 mg KOH/g polymer. The term "acid number" denotes the number of mg of KOH necessary for neutralizing 1 g of polymer.

Polyvinyl acetals with several different units B and/or C and/or D can also be used within the framework of the present invention. The ratio of units A, B, C and D in the polyvinyl acetals of the present invention is not particularly restricted; however, the following ratios are preferred:
Unit A 10 to 40 wt.-% (especially preferred 15 to 30 wt.-%),
Unit B 0.1 to 25 wt.-% (especially preferred 1 to 15 wt.-%),
Unit C 10 to 80 wt.-% (especially preferred 25 to 65 wt.-%) and
Unit D 1 to 40 wt.-% (especially preferred 10 to 20 wt.-%),
each based on the total weight of the acetal polymer.

If several different units B are present, the amount given refers to the total amount of units B. The same applies to units C and D.

The vinyl alcohol/vinyl acetate copolymers that serve as starting materials in the preparation of the acidic polyacetals of the present invention are preferably hydrolyzed to a degree of 70 to 98 mole-% and usually have a weight-average molecular weight M_{w} of 20000 to 130000 g/mole. Exactly which copolymer is used as a starting material for the synthesis, depends on the desired future application of the heat-sensitive element. For offset printing plates, polymers with a weight-average molecular weight M_{w} of 35000 to 130000 g/mole and a degree of hydrolysis of the vinyl acetate structural unit of 80 to 98 mole-% are preferably used.

The acidic polyvinyl acetals can be produced according to known methods. Acidic polyvinyl acetals suitable for the present invention and their production are described in detail e.g. in US A-5,169,897, DE-B-34 04 366 and DE-A-100 11 096.

The amount of acidic polyvinyl acetal in the heat-sensitive coating is preferably 5 to 25 wt.-% based on the dry layer weight of the coating, more preferably 7 to 15 wt.-% and especially preferred 8 to 12 wt.-%.

In addition to acidic polyvinyl acetal, novolak, insolubilizer and optionally IR absorber, the heat-sensitive layer may comprise common amounts of additives such as polymer particles with an average particle diameter of preferably 0.5 to 5 µm, surfactants (e.g. anionic, cationic or neutral tensides or mixtures thereof), contrast dyes and pigments (e.g. Crystal Violet, Victoria Blue R, Victoria Pure Blue BO, methyl violet, anthraquinone pigments, azo pigments and phthalocyanine dyes and pigments) and plasticizers (e.g. dibutylphthalate, triarylphosphate, dioctylphthalate, glycerol triacetate and mixtures thereof).

The heat-sensitive layer is applied onto the optionally pre-treated substrate from a solution of all components in an organic solvent or solvent mixture (e.g. alcohols such as methanol, n- and iso-propanol, n- and iso-butanol; ketones such as methyl ethyl ketone, methyl propyl ketone, cyclohexanone; multifunctional alcohols and their derivatives such as ethylene glycol monomethylether and monoethylether, propylene glycol monomethylether and monoethylether; esters such as methyl lactate and ethyl lactate) and dried. This can be carried out by means of common coating methods such as coating with doctor blades, centrifugal coating, and the like.

The dry layer weight of the heat-sensitive layer in lithographic printing plate precursors is preferably 0.5 to 4.0 g/m², especially preferred 1 to 2 g/m².

Imaging can be carried out by direct heat or by means of IR radiation. When IR radiation is used, e.g. in the form of IR lasers or IR laser diodes emitting in the range of 750 to 1120 nm, the heat-sensitive coating should comprise an IR absorber. Any image-setters equipped with IR lasers that are known to the person skilled in the art can be used.

Developing of the image-wise irradiated/heated elements, such as e.g. printing plate precursors, is carried out by means of an aqueous alkaline developer, which usually has a pH value in the range of 10 to 14. Commercially available developers can be used for that purpose.

Developed printing plates can additionally be subjected to a baking step in order to increase the abrasion resistance of the printing areas; however, this is not absolutely necessary in the case of the printing plates of the present invention since due to their excellent solvent resistance, very high numbers of copies can be printed without any deterioration in quality.

The printing plates according to the present invention are characterized by their excellent chemical resistance to organic solvents contained in fountain solutions, wash solutions and some printing inks (e.g. petrol ether, glycols and glycol ether, as well as linear, branched and cyclic alkanols), while at the same time their developability and IR sensitivity remain at a high level.

Preferably, the heat-sensitive elements of the present invention are not sensitive to visible light and the UV portion of daylight when subjected to the common processing conditions of printing plates so that they can be processed in white light, i.e. no yellow light conditions have to be adhered to.

The present invention is described in more detail in the following examples; however, it is not restricted to these embodiments.

### Examples

### Preparation Example 1 (according to WO 93/03068)

In a three-necked flask, equipped with a thermometer, reflux condenser, tap funnel and magnetic stirrer, 135 g Mowiol 10/98™ (vinyl alcohol/vinyl acetate copolymer of the company Clariant comprising 2 wt.-% vinyl alcohol units and having a molecular weight M_{w} of 61000 g/mole) were stirred for 15 hours at 55°C in a mixture of 625 g n-propanol and 310 g water. Then, 15 g concentrated hydrochloric acid were added. Subsequently, a solution of 58 g propionaldehyde and 21.7 g 4-formyl benzoic acid in 100 g n-propanol was added drop-wise within 45 minutes and the mixture was then stirred for another 4 hours at the same temperature. Then the mixture was cooled to room temperature and a solution of 16 g sodium carbonate in 30 ml water was added, causing the pH value to set at 7. The reaction product was then precipitated by stirring the mixture into 4 l water. The product was separated, intensively washed with water and dried for two days at approximately 45°C in a circulating air oven. The yield was 91% based on the Mowiol 10/98 ™ used. The obtained product was examined with respect to its content of acidic groups and an acid number of 40 mg KOH/g polymer was found.

### Preparation Example 2 (according to WO 93/03068

In a three-necked flask, equipped with a thermometer, reflux condenser, tap funnel and magnetic stirrer, 135 g Mowiol 10/98 ™ (vinyl alcohol/vinyl acetate copolymer of the company Clariant comprising 2 wt.-% vinyl alcohol units and having a molecular weight M_{w} of 61000 g/mole) were stirred for 15 hours at 55°C in a mixture of 625 g n-propanol and 310 g water. Then, 15 g concentrated hydrochloric acid were added. Subsequently, a solution of 12.8 g acetaldehyde, 48.8 g butyraldehyde and 64 g 4-formyl benzoic acid in 120 g n-propanol was added drop-wise within 45 minutes and the mixture was then stirred for another 4 hours at the same temperature. Then the mixture was cooled to room temperature and a solution of 16 g sodium carbonate in 30 ml water was added, causing the pH value to set at 7. The reaction product was then precipitated by stirring the mixture into 4 l water. The product was separated, intensively washed with water and dried for two days at approximately 45°C in a circulating air oven. The yield was 91% based on the Mowiol 10/98™ used. The obtained product was examined with respect to its content of acidic groups and an acid number of 140 mg KOH/g polymer was found.

### Preparation Example 3 (according to DE-A-100 11 096)

29 g of a copolymer consisting of 93 mol-% vinyl alcohol, 5 mol-% vinyl acetate and 2 mol-% acrylic acid (viscosity of a 4 wt.-% aqueous solution at 20°C: 11.0 mPas) were dissolved in 250 ml dimethyl sulfoxide (DMSO). Subsequently, a mixture of 11.6 g butyraldehyde and 3 g acetaldehyde in 20 ml DMSO were added, and the solution was stirred for 8 hours at 30°C. The polyvinyl acetate was precipitated in 1 l water, intensively washed with water and dried for two days at approximately 45°C in a circulating air oven. The yield was 88% based on the copolymer used. The obtained product was examined with respect to its content of acidic groups and an acid number of 17 mg KOH/g polymer was found.

### Preparation Example 4 (according to DE-A-34 04 366)

25 g Mowital B30T ™ (polyvinyl butyral copolymer of the company Clariant comprising 25 wt.-% polyvinyl alcohol units) were dissolved in 500 ml dry methyl ethyl ketone in a round bottomed flask at 70°C. Then 10 g maleic acid anhydride were added followed by 1 ml triethyl amine. The reaction was continued at 80°C for 16 hours in a moisture-proof environment. Then the mixture was cooled to room temperature and the reaction product was precipitated by stirring the mixture into 2 l water. The product was separated, intensively washed with water and dried for two days at approximately 40°C in a circulating air oven. The yield was 89% based on the Mowital B30T™ used. The obtained product was examined with respect to its content of acidic groups and an acid number of 46 mg KOH/g polymer was found.

### Preparation Example 5 (according to US 09/751,650)

Into a 100 ml flask were added 20 g dried THF and 2.8 g dried 6-methylisocytosine (available from Aldrich). To this mixture was added 4.5 g isophorone diisocyanate (available from Aldrich), and the flask was sealed from atmospheric moisture with a conical stopper. The mixture was left stirring at room temperature for 6 days.
110 g solid m-cresole novolak resin Alnovol SPN 564 (available from Clariant) was dissolved in 400 g dried THF in a 1 l flask and the above mixture was added slowly while stirring. Slow stirring was continued for 2 days at room temperature. Then the mixture was slowly poured as a thin stream into 3 l of vigorously stirred water. Initially, the product precipitated as a sticky viscous mass, but tended to harden and crumble with further stirring. The aqueous phase was decanted and replaced with 1 l fresh water and vigorously stirred overnight to form a fine precipitate which was isolated by filtration, washed with 0.5 l water and dried for tow days at approximately 45°C in a circulating air oven. The yield was 93% based on the novolak used.

### Preparation Example 6

20 g Mowital B70H ™ (polyvinyl butyral copolymer of the company Clariant comprising 20 wt.-% polyvinyl alcohol units and having a molecular weight M_{w} of 180000 g/mole) were dissolved in 300 ml dried THF at 50°C in a three-necked flask, equipped with a thermometer, reflux condenser sealed from atmospheric moisture with a drying tube, tap funnel and magnetic stirrer. Then, 44 g toluene sulfonylisocyanate (available from Aldrich) were slowly added while stirring. After another hour of stirring, the solution was cooled to room temperature and the reaction product was precipitated by stirring the mixture into 2 l water. The product was separated, intensively washed with water and dried for one day at approximately 40°C in a circulating air oven. The dried product was washed with 300 ml diethyl ether and dried again for one day at approximately 40°C in a circulating air oven. The yield was 89% based on the Mowital B70H™ used.

### Preparation Example 7 (according to US-A-5,849,842)

50 g Mowiol 5/88™ (vinyl alcohol/vinyl acetate copolymer of the company Clariant comprising 79 wt.-% vinyl alcohol units and having a molecular weight M_{w} of 37000 g/mole) were stirred for 15 hours at 55°C in a mixture of 270 g n-propanol and 150 g water in a three-necked flask, equipped with a thermometer, reflux condenser, tap funnel and magnetic stirrer. Then, 6.8 g concentrated hydrochloric acid were added. Subsequently, a solution of 18 g 4-benzene sulfonamide butyraldehyde diethyl acetal, prepared as described in Preparation Example 2 of US-A-5,849,842, and 14.2 g butyraldehyde in 35 g n-propanol was added drop-wise within 30 minutes and the mixture was then stirred for another 3.5 hours at the same temperature. Then the mixture was cooled to room temperature and a solution of 7.3 g sodium carbonate in 15 ml water was added, causing the pH value to set at 7. The reaction product was then precipitated by stirring the mixture into 2 l water. The product was separated, intensively washed with water and dried for two days at approximately 45°C. The yield was 89% based on the Mowiol 5/88 ™ used. The obtained product was examined with respect to its content of remaining vinyl alcohol units by means of common methods; the content was 25 wt.-%.

### Example 1

A coating composition was prepared by dissolving

| | |
|---|---|
| 9.8 g | Alnovol SPN 452 (novolak resin available from Clariant with a solids content of 42 wt.-% in 1-methoxypropane-2-ol (Dowanol PM)) |
| 0.44 g | polyvinyl acetal of Preparation Example 1 |
| 0.15 g | 3-mercapto-1,2,4-triazole |
| 0.18 g | N-benzyl quinolinium bromide |
| 0.15 g | crystal violet |
| 0.06 g | 2-[2-[2-thiophenyl-3-[2-(1,3-dihydro-1,3,3-trimethyl-2H-indole-2-ylidene)-ethylidene]-1-cyclohexane-1-yl]-ethenyl]-1,3,3-trimethyl-3H-indolium-chloride and |
| 0.05 g | Byk 307 (available from Byk Chemie) |

in 36 g of a solvent mixture comprising Dowanol PM and methyl ethyl ketone (1:1 weight ratio). This solution was applied onto an electrochemically roughened, anodized and polyvinyl phosphoric acid sealed aluminum substrate by means of a wire wound bar, dried in an oven for 4 minutes at 90°C to obtain a printing plate precursor having a dry layer weight of 1.4 g/m².

After one day of storage at 50°C, the printing plate precursor was imaged on a Creo Trendsetter 3244 image-setter emitting at 830 nm, with an imaging density of 160 mJ/cm². The Kodak Professional Colorflow Strip (available from Eastman Kodak), which contains different elements for evaluating the quality of the copies, was used for imaging. Immediately after imaging, the imaged printing plate precursor was developed in a Kodak Polychrome Graphics Mercury 850 processor equipped with an immersion type developing bath containing developer 9005 (available from Kodak Polychrome Graphics) and additionally containing 0.75 wt.% Petro A Solution (available from Witco), a section for rinsing with water, a gumming and a drying section. 1 to 99% dots were measured with a D19C/D 196 densitometer (Gretag/Macbeth), and the 1 and 2 pixel elements had both been well reproduced.
The developed plate was mounted in a sheet-fed offset press and used for printing. The image areas accepted the printing ink without any problems and the paper copies did not show any toning in the non-image areas. After 40000 copies, the printing was discontinued; however, the plate could have been used for more prints.

In order to assess the solvent resistance (solvent resistance test) of the plate, the following method was used: 10 cm x 10 cm pieces of a non-exposed but developed plate without gumming were immersed in the model wash solution mixtures 1, 2 and 3; see Table 1. In this experiments (and the following experiments), the following time steps were used: 0.5 minutes, 1 minute, 2 minutes, 3 minutes and 4 minutes. At each stage, the plates were wiped gently with a POLYTAMP wipe, and then removed from the solution to see whether coating had been lost. This was assessed by examining the change in the plate color. The amount of time (in minutes) for which the plate was resistant to wash solvents is given in Table 2.

in order to gravimetrically determine the weight of coating loss (soak loss test), 10 cm² discs of the non-exposed but developed plate were placed for 10 minutes in 50 ml wash solutions. Then they were dried for 4 minutes at 90°C. The weight loss was determined by measuring the weight of the discs at room temperature before and after soaking in the wash solutions. The weight loss was expressed in weight percent by dividing the weight loss by the starting weight of the coating. The results are shown in Table 3.

In order to assess the resistance of the plate against fountain solutions (fountain solution resistance test) the following method was used: A strip of 50% checkerboard pattern was imaged on the precursors using the above-described exposure method, which were then developed (without gumming) as described above. Samples of the plates were cut into 6 cm x 10 cm pieces so that half the area lengthways was covered by a 50% dot tint and the other half was covered by a solid region. The samples were immersed in fountain solutions 1 and 2 (Table 4) for 20 and 30 minutes, carefully washed with water and dried. Then, a strip of SCOTCH 500 adhesive tape (available from 3M) was placed on the right side of the samples such that half of the 50% area and half of the solid area was covered; subsequently, the adhesive tape was rapidly ripped away in one sharp movement to remove loose coating. The solid region of the plate immersed in the two fountain solutions for 20 and 30 minutes was subjected to no degradation, and the 50% region was subjected to very little coating loss only.

### Example 2

A coating solution was prepared by dissolving

| | |
|---|---|
| 10.0 g | Alnovol SPN 452 (novolak resin available from Clariant with a solids content of 42 wt.-% in Dowanol PM) |
| 0.56 g | polyvinyl acetal of Preparation Example 2 |
| 0.15 g | 2-mercapto benzothiazole |
| 0.15 g | crystal violet |
| 0.10 g | 2-[2-[2-chloro-3-[2-(1,3-dihydro-1,3,3-trimethyl-2H-benzo[e]-indole-2-ylidene)-ethylidene]-1-cyclohexene-1-yl]-ethenyl]-1,3,3-trimethyl-1H-benzo[e]-indolium-tosylate and |
| 0.05 g | Byk 307 (available from Byk Chemie) |

in 30 g of a solvent mixture comprising Dowanol PM and methyl ethyl ketone (1:1 weight ratio). This solution was applied onto an electrochemically roughened, anodized and polyvinyl phosphoric acid sealed aluminum substrate by means of a wire wound bar, dried in an oven for 4 minutes at 90°C to obtain a printing plate precursor having a dry layer weight of 1.8 g/m².

After one day of storage at 50°C, the printing plate precursor was imaged on a Creo Trendsetter 3244 image-setter (830 nm), with an imaging density of 160 mJ/cm². A Kodak Professional Colorflow Strip (available from Eastman Kodak) as described above was used. Developing was carried out as described in Example 1. 1 to 99% dots were measured with a D19C/D 196 densitometer (available from Gretag/Macbeth), and the 1 and 2 pixel elements had been well reproduced. The tests regarding solvent resistance, weight loss and fountain solution resistance were carried out as described in Example 1. The results of the solvent resistance and weight loss tests can be found in Tables 2 and 3, respectively. The solid regions of the plates immersed in the two fountain solutions for 20 and 30 minutes were subjected to no degradation, and the 50% regions were subjected to very little coating loss only.

### Example 3

Example 1 was repeated, but instead of the polymer of Preparation Example 1, that of Preparation Example 3 was used. After exposure and developing, a positive working plate with well reproduced dots and pixel elements was obtained.
The developed plate was mounted in a sheet-fed offset press and used for printing. The image areas accepted the printing ink without any problems and the paper copies did not show any toning in the non-image areas. After 40000 copies, the printing was discontinued; however, the plate could have been used for more prints. The tests regarding solvent resistance, weight loss and fountain solution resistance were carried out as described in Example 1, and the results can be found in Tables 2 and 3, respectively. The solid regions of the plates immersed in the two fountain solutions for 20 and 30 minutes were subjected to no degradation, and the 50% regions were subjected to very little weight loss only.

### Example 4

A coating composition was prepared by dissolving

| | |
|---|---|
| 4.12 g | PD 140A (novolak resin available from Borden Chemicals) |
| 0.67 g | polyvinyl acetal of Preparation Example 4 |
| 0.10 g | ethyl violet and |
| 0.26 | g ADS 1060 (IR dye available from ADS Corp., Canada) |

in 45 ml of a solvent mixture comprising Dowanol PM, dioxalane and methanol in a volume ratio of 1.5:4.5:4. This solution was applied onto an electrochemically roughened, anodized and polyvinyl phosphoric acid sealed aluminum substrate by means of a wire wound bar, dried in an oven for 30 minutes at 100°C to obtain a printing plate precursor having a dry layer weight of 2.0 g/m².

The printing plate precursor was imaged on a Gerber Crescent 3030T image-setter (1064 nm), with 750 units. Again, a Kodak Professional Colorflow Strip was used for imaging. Immediately after imaging, developing was carried out with developer 2000M (available from Kodak Polychrom Graphics LLC), and a good positive image was obtained. Both the 1 to 99% dots and the 1 and 2 pixel elements had been well reproduced. The tests regarding solvent resistance was carried out as described in Example 1; the results are shown in Table 2.

### Example 5

A coating solution was prepared by dissolving

| | |
|---|---|
| 4.8 g | functionalized novolak resin of Preparation Example 5 |
| 0.22 g | polyvinyl acetal of Preparation Example 2 |
| 0.15 g | 3-mercapto-1,2,4-triazole |
| 0.15 g | crystal violet |
| 0.06 g | 2-[2-[2-thiophenyl-3-[2-(1,3-dihydro-1,3,3-trimethyl-2H-indole-2-ylidene)-ethylidene]-1-cyclohexene-1-yl]-ethenyl]-1,3,3-trimethyl-3H-indolium-chloride and |
| 0.05 g | Byk 307 (available from Byk Chemie) |

in 30 g of a solvent mixture comprising Dowanol PM and methyl ethyl ketone (1:1 weight ratio). This solution was applied onto an electrochemically roughened, anodized and polyvinyl phosphoric acid sealed aluminum substrate by means of a wire wound bar, dried in an oven for 4 minutes at 90°C to obtain a printing plate precursor having a dry layer weight of 1.6 g/m².
After one day of storage at 50°C, the printing plate precursor was imaged on a Creo Trendsetter 3244 image-setter (830 nm), with an imaging density of 160 mJ/cm². A Kodak Professional Colorflow Strip (available from Eastman Kodak) as described above was used. Immediately after imaging, developing was carried out with developer Goldstar Plus (available from Kodak Polychrom Graphics LLC), and a good positive image was obtained. Both the 1 to 99% dots and the 1 and 2 pixel elements had been well reproduced. The tests regarding solvent resistance, weight loss and fountain solution resistance were carried out as described in Example 1. The results of the solvent resistance and weight loss tests can be found in Tables 2 and 3, respectively. The solid regions of the plates immersed in the two fountain solutions for 20 and 30 minutes were subjected to no degradation, and the 50% regions were subjected to very little coating loss only.

### Comparative Example 1

A coating solution was prepared by dissolving

| | |
|---|---|
| 10.7 g | Alnovol SPN 452 (novolak resin available from Clariant with a solids content of 42 wt.% in Dowanol PM) |
| 0.15 g | 3-mercapto-1,2,4-triazole |
| 0.18 g | N-benzyl quinolinium bromide |
| 0.15 g | crystal violet |
| 0.06 g | 2-[2-[2-thiophenyl-3-[2-(1,3-dihydro-1,3,3-trimethyl-2H-indole-2-ylidene)-ethylidene]-1-cyclohexene-1-yl]-ethenyl]-1,3,3-trimethyl-3H-indolium-chloride and |
| 0.05 g | Byk 307 (available from Byk Chemie) |

in 36 g of a solvent mixture comprising Dowanol PM and methyl ethyl ketone (1:1 weight ratio). This solution was applied onto an electrochemically roughened, anodized and polyvinyl phosphoric acid sealed aluminum substrate by means of a wire wound bar, dried in an oven for 4 minutes at 90°C to obtain a printing plate precursor having a dry layer weight of 1.6 g/m².

After one day of storage at 50°C, the printing plate precursor was imaged on a Creo Trendsetter 3244 image-setter (830 nm), with an imaging density of 160 mJ/cm². A Kodak Professional Colorflow Strip (available from Eastman Kodak) as described above was used. The plate was processed further as described in Example 1. 1 to 99% dots were measured with a D19C/D 196 densitometer (available from Gretag/Macbeth), and the 1 and 2 pixel elements had been well reproduced.

During the solvent resistance test, a resistance of only 0.5 minutes was found for all solvent mixtures. The fountain solution resistance test after 20 minutes immersion in fountain solutions 1 and 2 caused a substantial coating loss in both the solid and the 50% regions. Together with the high numbers of the coating loss (see Table 3), which were determined as described in Example 1 (soak loss test), these data indicate that the solvent resistance was inferior to that of the inventive printing plates whose coating comprised acidic polyvinyl acetals.

### Comparative Example 2

Example 5 was repeated, but the polyvinyl acetal of Preparation Example 2 was omitted. After exposure and developing, a positive working plate with well reproduced dots and pixel elements was obtained.

The resistance to the wash solutions (solvent resistance test) was less than 0.5 minutes for all solvent mixtures. The fountain solution resistance test after 20 minutes immersion in fountain solutions 1 and 2 caused a substantial coating loss in both the solid and the 50% regions. Together with the high numbers of the coating loss (see Table 3), these data indicate that the solvent resistance was inferior to that of the inventive printing plates whose coating comprised acidic polyvinyl acetals.

### Comparative Example 3

Example 1 was repeated, but instead of the polymer of Preparation Example 1, that of Preparation Example 7 was used. After exposure and developing, a positive working plate with well reproduced dots and pixel elements was obtained.

The resistance to the wash solutions was 1 minute for solvent mixture 1 and less than 0.5 minutes for solvent mixtures 2 and 3. The fountain solution resistance test after 20 minutes immersion in fountain solutions 1 and 2 caused a substantial coating loss in both the solid and the 50% regions. Together with the high numbers of the coating loss (see Table 3), these data again indicate that the inventive use of acidic polyvinyl acetals results in a higher solvent resistance than the use of sulfonamide-substituted polyvinyl acetals.

### Comparative Example 4 (according to EP-A-1 101 607)

A coating composition was prepared by dissolving

| | |
|---|---|
| 2.8 g | LB6564 (novolak resin available from Bakelite) |
| 1.8 g | BB744 (novolak resin available from Bakelite) |
| 0.11 g | crystal violet |
| 0.03 g | KF654 PINA (IR dye available from Allied Signal) |
| 0.05 | g ADS 830A (IR dye available from ADS Corp., Canada) |
| 0.11 g | CAHP™ (cellulose acetate hydrogen phthatate available from Aldrich and |
| 0.31 g | Silikophen P50X (silicone resin available from Tego Chemie) |

in 40 g Dowanol PM. This solution was applied onto an electrochemically roughened, anodized and polyvinyl phosphoric acid sealed aluminum substrate by means of a wire wound bar, dried in an oven for 4 minutes at 90°C to obtain a printing plate precursor having a dry layer weight of 2.1 g/m². Further imaging of the plate was carried out as described in Example 4 of EP-A-1 101 607.

The resistance to the wash solutions was less than 0.5 minutes for all three solvent mixtures. The fountain solution resistance test after 20 minutes immersion in fountain solutions 1 and 2 caused a substantial coating loss in both the solid and the 50% regions. Together with the high numbers of the coating loss (see Table 3), these data indicate that solvent resistance has been improved by the use of the acidic polyvinyl acetals of the present invention compared to the acidic cellulose derivatives of the prior art.

### Comparative Example 5

Example 1 was repeated, but instead of the polymer of Preparation Example 1, that of Preparation Example 6 was used. After exposure and developing, a positive working plate with well reproduced dots and pixel elements was obtained.

The resistance to the wash solutions was less than 1 minute for solvent mixture 1 and 0.5 minutes for solvent mixtures 2 and 3. After 20 minutes immersion in fountain solutions 1 and 2 a substantial coating loss in both the solid and the 50% regions was observed. This example shows that solvent resistance has been improved by the use of the acidic polyvinyl acetals of the present invention compared to sulfourea-substituted polyvinyl acetals.

**Table 1: Wash solutions for testing solvent resistance**

| Solution number | Water (wt.-%) | Isopropyl alcohol (wt.-%) | Petrol ether* (wt.-%) |
|---|---|---|---|
| 1 | 0.1 | 15 | 84.9 |
| 2 | 0.5 | 15 | 84.5 |
| 3 | 1.0 | 20 | 79 |

| | | | |
|---|---|---|---|
| *boiling point range 135 -180°C | | | |

**Table 2: Resistance of plates to wash solutions (in minutes)**

| Plate | Solution 1 | Solution 2 | Solution 3 |
|---|---|---|---|
| Example 1 | 4 | 3 | <3 |
| Example 2 | 4 | 3 | 2 |
| Example 3 | 3 | <3 | <2 |
| Example 4 | 4 | <3 | 2 |
| Example 5 | <4 | <3 | 2 |
| Comparative Example 1 | <0.5 | <0.5 | <0.5 |
| Comparative Example 2 | <0.5 | <0.5 | <0.5 |
| Comparative Example 3 | <1 | <0.5 | <0.5 |
| Comparative Example 4 | <0.5 | <0.5 | <0.5 |
| Comparative Example 5 | 1 | <0.5 | <0.5 |

**Table 3: Weight loss in wash solutions (in wt.-%)**

| Plate | Solution 1 | Solution 2 | Solution 3 |
|---|---|---|---|
| Example 1 | 6 | 21 | 33 |
| Example 2 | 5 | 23 | 33 |
| Example 3 | 8 | 23 | 32 |
| Example 5 | 7 | 24 | 31 |
| Comparative Example 1 | 25 | 33 | 42 |
| Comparative Example 2 | 34 | 40 | 48 |
| Comparative Example 3 | 34 | 39 | 54 |
| Comparative Example 4 | 42 | 46 | 53 |
| Comparative Example 5 | 26 | 31 | 42 |

**Table 4: Fountain solutions**

| Fountain solution 1 | | Fountain solution 2 | |
|---|---|---|---|
| Isopropyl alcohol | 165 g | Isopropyl alcohol | 165 g |
| SUBSTIFIX** | 44 g | COMBIFIX** | 44 g |
| Water | 800g | Water | 800g |

| | | | |
|---|---|---|---|
| **available from Horstmann-Steinberg (Germany) | | | |

## Claims

1. Heat-sensitive element comprising
(a) an optionally pre-treated substrate
(b) a positive working heat-sensitive coating comprising.
(i) at least one novolak resin,
(ii) at least one component which reduces the aqueous alkaline developer solubility of novolak, wherein said reduction in solubility is reversed upon the application of heat, and
(iii) at least one acidic polyvinyl acetal comprising the structural units (A),(B),(C) 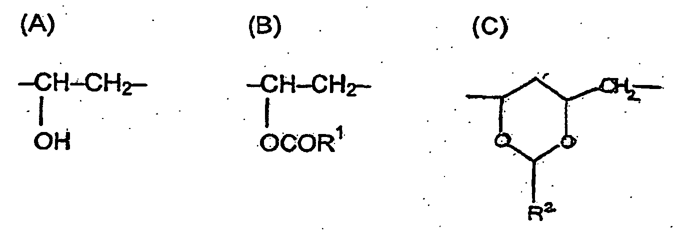 and (D), wherein (D) is at least one unit selected from (D-1), (D-2), and (D-3): 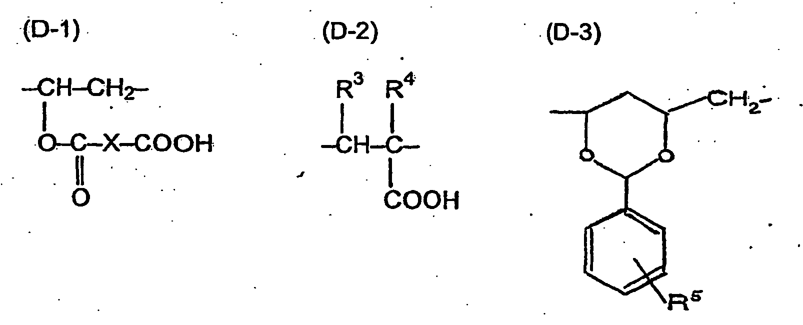
wherein
R¹ is a hydrogen atom or a C₁-C₄ alkyl group, R² is a hydrogen atom or a C₁-C₁₈ alkyl group, R³ is a hydrogen atom or a C₁-C₄ alkyl group, R⁴ is a hydrogen atom or a C₁-C₄ alkyl group, R⁵ is -COOH, -(CH₂)ₐ-COOH, -O-(CH₂)ₐ-COOH, -SO₃H, -PO₃H₂ or-PO₄H₂,
a is an integer from 1 to 8, and X is selected from
-(CR⁶R⁷)ₙ- and -CR⁸=CR⁹-
wherein n is an integer from 1 to 6,
each R⁶ and R⁷ is independently selected from a hydrogen atom and a C₁-C₆ alkyl group, and
R⁸ and R⁹ are independently selected from a hydrogen atom and a C₁-C₆ alkyl group or R⁸ and R⁹, together with the two carbon atoms to which they are bonded, form an optionally substituted aryl or heteroaryl group,
wherein components (i) and (ii) do not have to be present as separate substances but may be used in the form of an appropriately functionalized novolak.

2. Heat-sensitive element according to claim 1, wherein component (ii) of the heat-sensitive coating is selected from cyanine dyes, triarylmethane dyes, quinolinium compounds, insolubilizers with ketone or sulfone group(s) and novolaks functionalized with substituents capable of forming a four-center hydrogen bridge bond.

3. Heat-sensitive element according to claim 1 or 2, wherein the structural units (A), (B), (C) and (D) are present in the following amounts in the polyvinyl acetal, based on the weight of the polyvinyl acetal:
(A) 10 to 40 wt.-%
(B) 0.1 to 25 wt.-%
(C) 10 to 80 wt.-%
(D) 1 to 40 wt.-%

4. Heat-sensitive element according to any of claims 1 to 3, wherein the polyvinyl acetal has an acid number of 10 to 160 mg KOH/g polymer.

5. Heat-sensitive element according to any of claims 1 to 4, wherein R¹ is -CH₃.

6. Heat-sensitive element according to any of claims 1 to 5, wherein R² is -(CH₂)₂CH₃.

7. Heat-sensitive element according to any of claims 1 to 6, wherein unit D has the formula D-1.

8. Heat-sensitive element according to claim 7, wherein X represents -CH=CH-.

9. Heat-sensitive element according to any of claims 1 to 6, wherein unit D has the formula D-2.

10. Heat-sensitive element according to claim 9, wherein R³ and R⁴ are each a hydrogen atom.

11. Heat-sensitive element according to any of claims 1 to 6, wherein unit D has the formula D-3.

12. Heat-sensitive element according to claim 11, wherein R⁵ represents COOH.

13. Heat-sensitive element according to any of claims 1 to 12, wherein the novolak resin is present in an amount of 40 to 95 wt.%, based on the dry layer weight.

14. Heat-sensitive element according to any of claims 1 to 13, wherein the component (ii) is present in an amount of 0.1 to 25 wt.-%, based on the dry layer weight.

15. Heat-sensitive element according to any of claims 1 to 14, wherein the polyvinyl acetal is present in an amount of 5 to 25 wt.-%, based on the dry layer weight.

16. Heat-sensitive element according to any of claims 1 to 15, wherein the heat-sensitive coating comprises at least one substance capable of absorbing radiation with a wavelength in the range of 750 to 1120 nm and converting it to heat.

17. Heat-sensitive element according to any of claims 1 to 16, wherein the heat-sensitive layer furthermore comprises at least one additive selected from polymer particles, surfactants, contrast dyes or pigments, and plasticizers.

18. Heat-sensitive element according to any of claims 1 to 16, said element being a lithographic printing plate precursor.

19. Heat-sensitive element according to claim 18, wherein the substrate is an aluminum substrate which prior to coating with the heat-sensitive coating was subjected to at least one treatment selected from (a) mechanical and/or chemical roughening, (b) anodizing and (c) application of a hydrophilizing layer.

20. Heat-sensitive element according to claim 18 or 19, wherein the dry layer weight of the heat-sensitive layer is 0.5 to 4.0 g/m².

21. Process for the production of a heat-sensitive element as defined in any of claims 1 to 20, comprising:
(a) providing an optionally pre-treated substrate,
(b) applying a solution comprising components (i), (ii), and (iii) as defined in any of claims 1 to 12, optionally comprising one or more additives selected from polymer particles, surfactants, contrast dyes or pigments, and plasticizers, and optionally comprising at least one substance capable of absorbing radiation with a wavelength in the range of 750 to 1120 nm and converting it to heat, and
(c) drying.

22. Process for imaging a heat-sensitive element comprising:
(a) providing a heat-sensitive element as defined in any of claims 1 to 20,
(b) image-wise exposure of the element with IR radiation or image-wise direct heating, and
(c) removing the imaged or directly heated areas of the coating by means of an aqueous alkaline developer.

23. Heat-sensitive composition comprising
(a) one or more organic solvents,
(b) at least one novolak,
(c) at least one component which reduces the aqueous alkaline developer solubility of novolak, wherein said reduction in solubility is reversed upon the application of heat,
(d) at least one acidic polyvinyl acetal as defined in any of claims 1. 3, and 4 to 12, and
(e) optionally at least one additive selected from polymer particles, surfactants, contrast dyes or pigments, and plasticizers.

24. Heat-sensitive composition according to claim 23, wherein the composition additionally comprises at least one substance capable of absorbing radiation with a wavelength in the range of 750 to 1120 nm and converting it to heat.

25. Use of an acidic polyvinyl acetal as defined in any of claims 1, 3, and 4 to 12 for improving the solvent resistance of coatings of heat-sensitive elements whose heat-sensitive layer comprises a novolak resin and a component which reduces the aqueous alkaline developer solubility of novolak, wherein said reduction in solubility is reversed upon the application of heat.

## Patentansprüche

1. Wärmeempfindliches Element, umfassend
(a) einen gegebenenfalls vorbehandelten Träger
(b) eine positiv arbeitende wärmeempfindliche Beschichtung, umfassend
(i) mindestens ein Novolakharz,
(ii) mindestens eine Komponente, die die Löslichkeit von Novolak in einem wässrigen alkalischen Entwickler vermindert, wobei diese Verringerung der Löslichkeit durch die Einwirkung von Wärme wieder rückgängig gemacht wird, und
(iii) mindestens ein saures Polyvinylacetal, umfassend die Struktureinheiten (A), (B), (C) 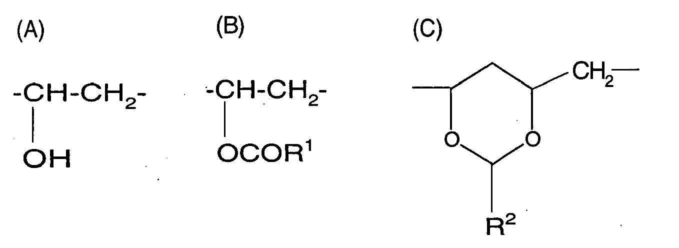 und (D), wobei (D) mindestens eine Einheit, ausgewählt aus (D-1), (D-2) und (D-3), ist: 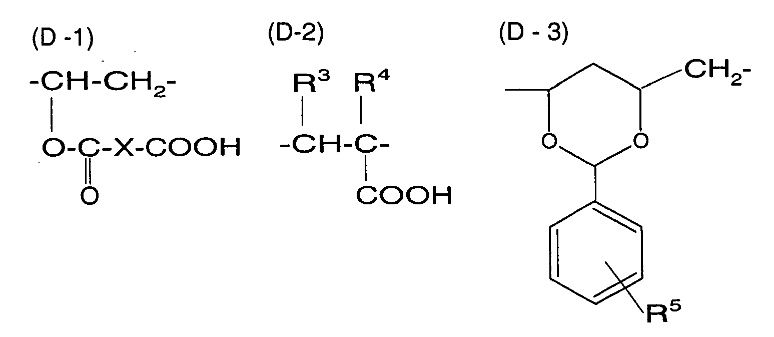
wobei
R¹ ein Wasserstoffatom oder ein C₁-C₄-Alkylrest ist, R² ein Wasserstoffatom oder ein C₁-C₁₈-Alkylrest ist, R³ ein Wasserstoff oder ein C₁-C₄-Alkylrest ist, R⁴ ein Wasserstoffatom oder ein C₁-C₄₋Alkylrest ist, R⁵ -COOH, -(CH₂)ₐ-COOH, -O-(CH₂)ₐ-COOH, -SO₃H, -PO₃H₂ oder -PO₄H₂ ist,
a eine ganze Zahl von 1 bis 8 ist, und X ausgewählt wird aus
-(CR⁶R⁷)ₙ- und -CR⁸=CR⁹-
wobei n eine ganze Zahl von 1 bis 6 ist,
jedes R⁶ und R⁷ unabhängig aus einem Wasserstoffatom und einem C₁-C₆ Alkylrest ausgewählt wird, und
R⁸ und R⁹ unabhängig voneinander ausgewählt sind aus einem Wasserstoffatom und einem C₁-C₆ Alkylrest oder R⁸ und R⁹ zusammen mit den beiden Kohlenstoffatomen, an die sie gebunden sind, einen gegebenenfalls substituierten Aryl- oder Heteroarylrest bilden,
wobei die Komponenten (i) und (ii) nicht als getrennte Substanzen vorliegen müssen, sondern in Form eines entsprechend funktionalisierten Novolaks eingesetzt werden können.

2. Wärmeempfindliches Element gemäß Anspruch 1, wobei Komponente (ii) der wärmeempfindlichen Beschichtung ausgewählt ist aus Cyaninfarbstoffen, Triarylmethanfarbstoffen, Chinoliniumverbindungen, Unlöslichmachern mit Keton-oder Sulfongruppe(n) und Novolaken funktionalisiert mit Substituenten, die zu einer Vier-Zentren-Wasserstoffbrückenbindung befähigt sind.

3. Wärmeempfindliches Element gemäß Anspruch 1 oder 2, wobei die Struktureinheiten (A), (B), (C) und (D) in dem Polyvinylacetal in folgenden Mengen, bezogen auf das Gewicht des Polyvinylacetals, vorliegen:
(A) 10 bis 40 Gew.-%
(B) 0,1 bis 25 Gew.-%
(C) 10 bis 80 Gew.-%
(D) 1 bis 40 Gew.-%

4. Wärmeempfindliches Element gemäß einem der Ansprüche 1 bis 3, wobei das Polyvinylacetal eine Säurezahl von 10 bis 160 mg KOH/g Polymer aufweist.

5. Wärmeempfindliches Element gemäß einem der Ansprüche 1 bis 4, wobei R¹ -CH₃ ist.

6. Wärmeempfindliches Element gemäß einem der Ansprüche 1 bis 5, wobei R² -(CH₂)₂CH₃ ist.

7. Wärmeempfindliches Element gemäß einem der Ansprüche 1 bis 6, wobei Einheit D die Formel D-1 hat.

8. Wärmeempfindliches Element gemäß Anspruch 7, wobei X -CH=CH- darstellt.

9. Wärmeempfindliches Element gemäß einem der Ansprüche 1 bis 6, wobei Einheit D die Formel D-2 hat.

10. Wärmeempfindliches Element gemäß Anspruch 9, wobei R³ und R⁴ jeweils ein Wasserstoffatom ist.

11. Wärmeempfindliches Element gemäß einem der Ansprüche 1 bis 6, wobei Einheit D die Formel D-3 hat.

12. Wärmeempfindliches Element gemäß Anspruch 11, wobei R⁵ COOH darstellt.

13. Wärmeempfindliches Element gemäß einem der Ansprüche 1 bis 12, wobei das Novolakharz in einer Menge von 40 bis 95 Gew.-%, bezogen auf das Trockenschichtgewicht, vorliegt.

14. Wärmeempfindliches Element gemäß einem der Ansprüche 1 bis 13, wobei die Komponente (ii) in einer Menge von 0,1 bis 25 Gew.-%, bezogen auf das Trockenschichtgewicht, vorliegt.

15. Wärmeempfindliches Element gemäß einem der Ansprüche 1 bis 14, wobei das Polyvinylacetal in einer Menge von 5 bis 25 Gew.-%, bezogen auf das Trockenschichtgewicht, vorliegt.

16. Wärmeempfindliches Element gemäß einem der Ansprüche 1 bis 15, wobei die wärmeempfindliche Beschichtung mindestens eine Substanz enthält, die in der Lage ist, Strahlung mit einer Wellenlänge im Bereich von 750-1120 nm zu absorbieren und in Wärme umzuwandeln.

17. Wärmeempfindliches Element gemäß einem der Ansprüche 1 bis 16, wobei die wärmeempfindliche Schicht außerdem mindestens ein Additiv, ausgewählt aus Polymerpartikeln, grenzflächenaktiven Mitteln, Farbstoffen oder -pigmenten zur Erhöhung des Farbkontrastes und Weichmachern, enthält.

18. Wärmeempfindliches Element gemäß einem der Ansprüche 1 bis 16, wobei das Element ein Lithographie-Druckplattenvorläufer ist.

19. Wärmeempfindliches Element gemäß Anspruch 18, wobei der Träger ein Aluminiumträger ist, der vor dem Beschichten mit der wärmeempfindlichen Beschichtung mindestens einer Behandlung, ausgewählt aus (a) mechanischem und/oder chemischem Aufrauen, (b) Anodisieren und (c) Hydrophilisieren, unterzogen worden ist.

20. Wärmeempfindliches Element gemäß Anspruch 18 oder 19, wobei das Trockenschichtgewicht der wärmeempfindlichen Schicht 0,5 bis 4,0 g/m² beträgt.

21. Verfahren zur Herstellung eines wärmeempfindlichen Elements wie in einem der Ansprüche 1 bis 20 definiert, umfassend:
(a) Bereitstellen eines gegebenenfalls vorbehandelten Trägers,
(b) Aufbringen einer Lösung umfassend Komponenten (i), (ii) und (iii), die wie in einem der Ansprüche 1 bis 12 definiert sind, gegebenenfalls enthaltend ein oder mehrere Additive, ausgewählt aus Polymerpartikeln, grenzflächenaktiven Mitteln, Farbstoffen oder -pigmenten zur Erhöhung des Farbkontrastes und Weichmachern, und gegebenenfalls umfassend mindestens eine Substanz, die in der Lage ist, Strahlung mit einer Wellenlänge im Bereich von 750-1120 nm zu absorbieren und in Wärme umzuwandeln,
und
(c) Trocknen.

22. Verfahren zum Bebildern eines wärmeempfindlichen Elements, umfassend:
(a) Bereitstellen eines wärmeempfindlichen Elements wie in einem der Ansprüche 1 bis 20 definiert,
(b) bildweises Belichten des Elements mit IR-Strahlung oder bildweises direktes Erwärmen und
(c) Entfernen der belichteten bzw. direkt erwärmten Bereiche der Beschichtung mit einem wässrigen alkalischen Entwickler.

23. Wärmeempfindliche Zusammensetzung, umfassend
(a) ein oder mehrere organische Lösungsmittel,
(b) mindestens einen Novolak,
(c) mindestens eine Komponente, die die Löslichkeit von Novolak in einem wässrigen alkalischen Entwickler vermindert, wobei diese Verringerung der Löslichkeit durch die Einwirkung von Wärme wieder rückgängig gemacht wird,
(d) mindestens ein wie in einem der Ansprüche 1, 3 und 4 bis 12 definiertes saures Polyvinylacetal, und
(e) gegebenenfalls mindestens ein Additiv ausgewählt aus Polymerpartikeln, grenzflächenaktiven Mitteln, Farbstoffen oder -pigmenten zur Erhöhung des Farbkontrastes und Weichmachern.

24. Wärmeempfindliche Zusammensetzung gemäß Anspruch 23, wobei die Zusammensetzung außerdem mindestens eine Substanz umfasst, die in der Lage ist, Strahlung mit einer Wellenlänge im Bereich von 750-1120 nm zu absorbieren und in Wärme umzuwandeln.

25. Verwendung eines wie in einem der Ansprüche 1, 3 und 4 bis 12 definierten sauren Polyvinylacetals zur Verbesserung der Lösungsmittelbeständigkeit von Beschichtungen wärmeempfindlicher Elemente, deren wärmeempfindliche Schicht ein Novolakharz und eine Komponente umfasst, die die Löslichkeit von Novolak in einem wässrigen alkalischen Entwickler vermindert, wobei diese Verringerung der Löslichkeit durch die Einwirkung von Wärme wieder rückgängig gemacht wird.

## Revendications

1. Elément thermosensible comprenant :
(a) un substrat éventuellement prétraité,
(b) un revêtement positif thermosensible comprenant :
(i) au moins une résine novolaque,
(ii) au moins un constituant qui réduit la solubilité de la novolaque dans le développateur aqueux alcalin, ladite réduction de la solubilité étant inversée par l'application de chaleur, et
(iii) au moins un poly(acétal vinylique) acide comprenant les motifs structuraux (A), (B), (C) 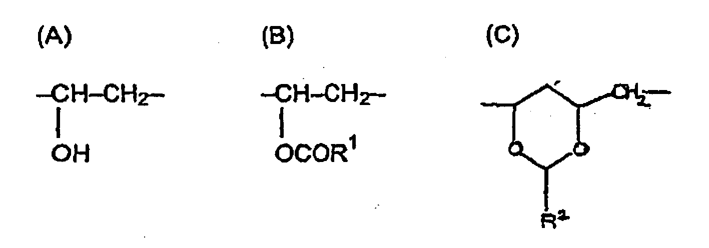 et (D), où (D) représente au moins un motif choisi parmi (D-1), (D-2) et (D-3) : 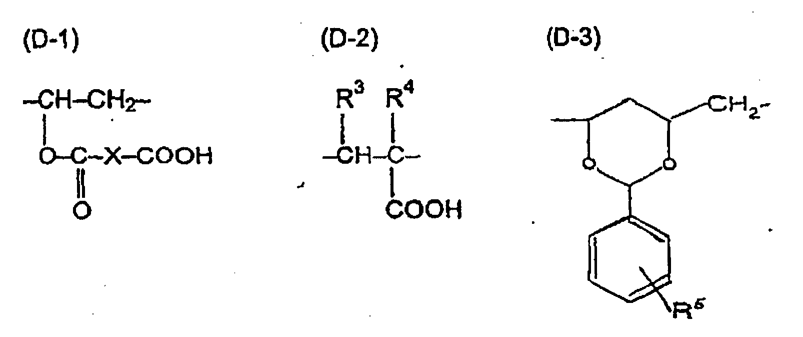
dans lesquels :
R¹ représente un atome d'hydrogène ou un groupe alkyle C₁-C₄, R² représente un atome d'hydrogène ou un groupe alkyle C₁-C₁₈, R³ représente un atome d'hydrogène ou un groupe alkyle C₁-C₄, R⁴ représente un atome d'hydrogène ou un groupe alkyle C₁-C₄, R⁵ représente -COOH, -(CH₂)ₐ-COOH, -O-(CH₂)ₐ-COOH, -SO₃H, -PO₃H₂ ou -PO₄H₂, a est un nombre entier de 1 à 8, et X est choisi parmi
-(CR⁶R⁷)n et -CR⁸=CR⁹-
où n est un nombre entier de 1 à 6,
chaque substituant R⁶ et R⁷ est choisi séparément entre un atome d'hydrogène et un groupe alkyle C₁-C₆, et
R⁸ et R⁹ sont choisis séparément entre un atome d'hydrogène et un groupe alkyle C₁-C₆, ou R⁸ et R⁹, associés aux deux atomes de carbone auxquels ils sont liés, forment un groupe aryle ou hétéroaryle éventuellement substitué,
dans lequel les constituants (i) et (ii) ne doivent pas nécessairement être présents sous forme de substances séparées, mais peuvent être utilisés sous la forme d'une novolaque contenant les groupes fonctionnels appropriés.

2. Elément thermosensible selon la revendication 1, dans lequel le constituant (ii) du revêtement thermosensible est choisi parmi les colorants cyanines, les colorants triarylméthanes, les composés de quinolinium, les agents d'insolubilisation ayant un ou des groupes cétone ou sulfone, et les novolaques fonctionnalisées par des substituants capables de former une liaison pontale hydrogène à quatre centres.

3. Elément thermosensible selon la revendication 1 ou 2, dans lequel les motifs structuraux (A), (B), (C) et (D) sont présents dans le poly(acétal vinylique) dans les quantités suivantes, basées sur le poids du poly(acétal vinylique) :
(A) 10 à 40 % en poids
(B) 0,1 à 25 % en poids
(C) 10 à 80 % en poids
(D) 1 à 40 % en poids.

4. Elément thermosensible selon l'une quelconque des revendications 1 à 3, dans lequel le poly(acétal vinylique) a un indice d'acide de 10 à 160 mg de KOH/g de polymère.

5. Elément thermosensible selon l'une quelconque des revendications 1 à 4, dans lequel R¹ représente -CH₃.

6. Elément thermosensible selon l'une quelconque des revendications 1 à 5, dans lequel R² représente -(CH₂)₂CH₃.

7. Elément thermosensible selon l'une quelconque des revendications 1 à 6, dans lequel le motif D a la formule D-1.

8. Elément thermosensible selon la revendication 7, dans lequel X représente -CH=CH-.

9. Elément thermosensible selon l'une quelconque des revendications 1 à 6, dans lequel le motif D a la formule D-2.

10. Elément thermosensible selon la revendication 9, dans lequel R³ et R⁴ représentent chacun un atome d'hydrogène.

11. Elément thermosensible selon l'une quelconque des revendications 1 à 6, dans lequel le motif D a la formule D-3.

12. Elément thermosensible selon la revendication 11, dans lequel R⁵ représente COOH.

13. Elément thermosensible selon l'une quelconque des revendications 1 à 12, dans lequel la résine novolaque est présente en une quantité de 40 à 95 % en poids, par rapport au poids à sec de la couche.

14. Elément thermosensible selon l'une quelconque des revendications 1 à 13, dans lequel le constituant (ii) est présent en une quantité de 0,1 à 25 % en poids, par rapport au poids à sec de la couche.

15. Elément thermosensible selon l'une quelconque des revendications 1 à 14, dans lequel le poly(acétal vinylique) est présent en une quantité de 5 à 25 % en poids, par rapport au poids à sec de la couche.

16. Elément thermosensible selon l'une quelconque des revendications 1 à 15, dans lequel le revêtement thermosensible comprend au moins une substance capable d'absorber un rayonnement ayant une longueur d'onde de 750 à 1120 nm et de le convertir en chaleur.

17. Elément thermosensible selon l'une quelconque des revendications 1 à 16, dans lequel la couche thermosensible comprend aussi au moins un additif choisi parmi des particules de polymère, des agents tensioactifs, des colorants ou pigments de contraste et des plastifiants.

18. Elément thermosensible selon l'une quelconque des revendications 1 à 16, ledit élément étant un précurseur de plaque d'impression lithographique.

19. Elément thermosensible selon la revendication 18, dans lequel le substrat est un substrat en aluminium qui, avant l'application du revêtement thermosensible, est soumis à au moins un traitement choisi parmi (a) un dépolissage mécanique et/ou chimique, (b) une anodisation et (c) l'application d'une couche d'hydrophilisation.

20. Elément thermosensible selon la revendication 18 ou 19, dans lequel le poids à sec de la couche thermosensible varie de 0,5 à 4,0 g/m².

21. Procédé de fabrication d'un élément thermosensible tel que défini dans l'une quelconque des revendications 1 à 20, comprenant :
(a) la préparation d'un substrat éventuellement prétraité,
(b) l'application d'une solution comprenant les constituants (i), (ii) et (iii), tels que définis dans l'une quelconque des revendications 1 à 12, comprenant éventuellement un ou plusieurs additifs choisis parmi des particules de polymère, des agents tensioactifs, des colorants ou pigments de contraste, et des plastifiants, et comprenant éventuellement au moins une substance capable d'absorber un rayonnement ayant une longueur d'onde de 750 à 1120 nm et de le convertir en chaleur, et
(c) un séchage.

22. Procédé pour exposer un élément thermosensible comprenant :
(a) la préparation d'un élément thermosensible tel que défini dans l'une quelconque des revendications 1 à 20,
(b) l'exposition conformément à l'image de l'élément par un rayonnement infrarouge (IR) ou un chauffage direct conformément à l'image, et
(c) l'élimination des zones du revêtement portant une image ou directement chauffées, au moyen d'un révélateur aqueux alcalin.

23. Composition thermosensible comprenant :
(a) un ou plusieurs solvants organiques,
(b) au moins une résine novolaque,
(c) au moins un constituant qui réduit la solubilité de la novolaque dans le développateur aqueux alcalin, ladite réduction de la solubilité étant inversée par l'application de chaleur,
(d) au moins un poly(acétal vinylique) acide, tel que défini dans l'une quelconque des revendications 1, 3 et 4 à 12, et
(e) éventuellement, au moins un additif choisi parmi des particules de polymère, des agents tensioactifs, des colorants ou pigments de contraste, et des plastifiants.

24. Composition thermosensible selon la revendication 23, dans laquelle la composition comprend aussi au moins une substance capable d'absorber un rayonnement ayant une longueur d'onde de 750 à 1120 nm et de le convertir en chaleur.

25. Utilisation d'un poly(acétal vinylique) acide, tel que défini dans l'une quelconque des revendications 1, 3 et 4 à 12, pour améliorer la résistance aux solvants des revêtements d'éléments thermosensibles dont la couche thermosensible comprend une résine novolaque et un constituant qui réduit la solubilité de la novolaque dans le révélateur aqueux alcalin, ladite réduction de la solubilité étant inversée par l'application de chaleur.
